# EUROPÄISCHE PATENTANMELDUNG

(11) **EP 2 292 712 A1**
(43) Veröffentlichungstag der Anmeldung: **09.03.2011**
(21) Anmeldenummer: 09169293.9
(22) Anmeldetag: 02.09.2009
(51) Int. Cl.: C09J 11/06, C09J 11/08

(54) **Verwendung von Carbodiimiden als Farbstabilisator in Schmelzklebstoffen**

(71) Anmelder: Rhein Chemie Rheinau GmbH, 68219 Mannheim (DE)
(72) Erfinder: Scheffner, Christian, 69207 Sandhausen (DE); Kray, Bernd, 67346 Speyer (DE); Laufer, Wilhelm, 67158 Ellerstadt (DE); Uestuenbas, Serdar, 68169 Mannheim (DE)
(74) Vertreter: Siegers, Britta

(57) **Zusammenfassung**

Die vorliegende Erfindung betrifft die Verwendung von Carbodiimiden zur Farbstabilisierung von Schmelzklebstoffen in der Schmelze.

## Beschreibung

Die vorliegende Erfindung betrifft Schmelzklebstoffzusammensetzungen, welche neben mindestens einem Antioxidationsmittel mindestens eine Carbodiimidverbindung umfassen.

Ferner betrifft die vorliegende Erfindung die Verwendung von Carbodiimiden zur Farbstabilisierung von Schmelzklebstoffen in der Schmelze. Weiterer Gegenstand der vorliegenden Erfindung ist die kombinierte Verwendung von Carbodiimiden mit speziellen Antioxidationsmitteln zur Farbstabilisierung von Schmelzklebstoffen.

Unter einer Farbstabilisierung wird im Rahmen der vorliegenden Erfindung ein Schutz von Schmelzklebstoffen vor Veränderung der Farbe verstanden. Insbesondere wird unter einer Farbstabilisierung im Rahmen der vorliegenden Erfindung verstanden, dass es bei einem Schmelzklebstoff in der Schmelze nicht zu einer Veränderung der Farbe kommt. Dabei wird im Rahmen der vorliegenden Erfindung insbesondere verstanden, dass der Schmelzklebstoff über einen Zeitraum von mindestens 48 Stunden bei einer Schmelztemperatur 130 °C unter Lichtausschluss unterworfen wird und es während dieser Prüfphase im Wesentlichen nicht zu einer Farbveränderung kommt.

Schmelzklebstoffe, auch Heißklebestoffe, Heißkleber oder Heißleim genannt, sind lösungsmittelfreie und bei Raumtemperatur mehr oder weniger feste Produkte, die im heißen Zustand beispielsweise auf die Oberfläche eines Gegenstandes aufgetragen werden und beim Abkühlen eine Verbindung zwischen der Oberfläche des Gegenstandes und einer weiteren Oberfläche erzeugen. Diese auch als Hotmelt bekannte Gruppe von Klebstoffen basiert auf verschiedenen chemischen Systemen.

Bei der Anwendung wird der Schmelzklebstoff zum Schmelzen gebracht und in einer aufgeweichten Form beispielsweise einem Beschichtungskopf zugeführt. Von dort wird der geschmolzene Klebstoff durch eine Form gepresst, um die Klebstoffschicht zu bilden.

Schmelzklebstoffsysteme sind aus dem Stand der Technik umfangreich bekannt.

So beschreibt die EP 1 533 331 A Polyamide auf Basis von C₄-C₁₈-Dicarbonsäuren und Diaminen als Formmasse zur Herstellung von Formteilen im Niederdruckspritzgussverfahren. Als Verwendung wird beschrieben, dass in solche flüssigen Schmelzklebstoff-Formteile andere Formteile, wie Kabel, Kabelsteckverbindungen und Kontakthülsen, eingegossen werden können und so eine feste mechanische Verbindung ergeben.

Weiterhin ist die EP 0 586 450 A bekannt. Diese beschreibt Schmelzklebstoffe unter anderem aus Polyamid, die einen bestimmten Schmelzbereich aufweisen. Mit solchen aufgeschmolzenen Schmelzklebstoffen können dann Kabel oder Steckverbindungen vergossen werden. Diese ergeben dabei eine verklebte und abgedichtete Umhüllung der Steckverbindung.

Auch nichtreaktive Schmelzklebstoffe sind bekannt. So werden in der EP 1 124 911 A Schmelzklebstoffe beschrieben, die auf Basis von Poly-α-olefinen hergestellt werden. Diese werden insbesondere für den Auftrag des Schmelzklebstoffs durch Sprühen beschrieben. Die EP 0 388 712 A beschreibt Schmelzklebstoffe auf Basis von Ethylen-Acrylsäure-Acrylester-Copolymeren. Diese Copolymeren dienen zur Verklebung von festen Substraten. Weiterhin werden in der EP 0 890 584 A Schmelzklebstoffe beschrieben, die auf Basis von Polyolefinen bestehen, die durch eine Metallocen-katalysierte Synthese hergestellt werden. Solche Schmelzklebstoffe zeichnen sich durch eine besonders enge Molekulargewichtsverteilung und durch einen engen Schmelzbereich aus.

Weiterhin ist die DE 19 924 138 A bekannt, in der Schmelzklebstoffzusammensetzung beschrieben werden, die nanoskalige ferromagnetische Teilchen enthalten. Es wird beschrieben, dass solche Klebverbindungen durch Einwirkung elektromagnetischer Strahlung erwärmt werden können, wobei sich die Klebeverbindung dann leicht lösbar ist.

Nachteilig bei diesen bekannten Schmelzklebstoffen ist, dass sie keine Farbstabilität über längere Zeiträume aufweisen, wenn sie in der Schmelze gelagert werden.

Eine Lagerung in der Schmelze über längere Zeiträume ist jedoch bei der Verwendung von Schmelzklebstoffen häufig erforderlich, beispielsweise bei dem Transport von Schmelzklebstoffen in temperierten Gefäßen oder während Standzeiten von Anlagen, in welchen Schmelzklebstoffe hergestellt, verarbeitet oder aber angewendet werden.

Typischerweise werden Schmelzklebstoffsysteme in Fässern oder Containern von bis zu 200 kg an Prozessstraßen bereitgestellt und der Schmelzklebstoff darin aufgeschmolzen. Je nach Prozess und Ausstattung können die reaktiven Schmelzklebstoffe dabei erheblichen, unter Umständen auch lang andauernden Temperaturbelastungen unterliegen.

Eine übliche Folge entsprechender Temperaturbelastungen ist eine deutliche Farbveränderung des Schmelzklebstoffes.

Um eine Farbveränderung der Schmelzklebstoffe zu verhindern, werden den Schmelzklebstoffen häufig entsprechende Additive, wie Antioxidationsmittel auf Basis von Phenolen, zugegeben. So beschreibt die EP 0 749 463 A beispielsweise die Verwendung von Irganox^{®} 1010, einem Antioxidationsmittel auf Phenolbasis, als Farbstabilisator in Schmelzklebstoffen.

Nachteilig an diesen Farbstabilisatoren ist jedoch, dass sie die Farbstabilisierungswirkung nicht immer zufriedenstellend ist.

Die Aufgabe der vorliegenden Erfindung ist demgemäß, eine verbesserte Verfahrensweise zur Stabilisierung der Farbe von Schmelzklebstoffen bereitzustellen. Die Verfahrensweise soll sich insbesondere für Schmelzklebstoff in der Schmelze eignen, so dass es bei diesem nicht zu einer Veränderung der Farbe kommt, wenn der Schmelzklebstoff für einen längeren Zeitraum in der Schmelze verbleibt.

Gelöst wird diese Ausgabe durch die gemeinsame Verwendung von Carbodiimiden mit speziellen Antioxidationsmitteln zur Farbstabilisierung von Schmelzklebstoffen in der Schmelze.

Gegenstand der vorliegenden Erfindung ist daher zunächst eine Schmelzklebstoffzusammensetzung, welche mindestens ein Antioxidationsmittel und mindestens eine Carbodiimidverbindung umfasst.

Weiterer Gegenstand der vorliegenden Erfindung ist die Verwendung von mindestens einer Carbodiimidverbindung zur Farbstabilisierung von Schmelzklebstoffen in der Schmelze.

Ferner betrifft die vorliegende Erfindung die die Verwendung von mindestens einer Carbodiimidverbindung in Kombination mit mindestens einem Antioxidationsmittel zur Farbstabilisierung von Schmelzklebstoffen in der Schmelze.

Schließlich betrifft die vorliegende Erfindung ein Verfahren zur Herstellung von erfindungsgemäßen Schmelzklebstoffen, umfassend mindestens ein Antioxidationsmittel und mindestens eine Carbodiimidverbindung.

Aus dem Stand der Technik ist bekannt, Carbodiimide als Hydrolyseschutzmittel von Schmelzklebstoffen zu verwenden.

So offenbart beispielsweise die WO 02/090454 A die Verwendung von Carbodiimiden als Hydrolyseschutzmittel in Schmelzklebstoffen. Die Verwendung von Carbodiimiden als Farbstabilisierungsmittel in Schmelzklebstoffen in der Schmelze ist jedoch aus diesem Stand der Technik nicht bekannt. Darüber hinaus sind erfahrungsgemäß die Mengen an Carbodiimiden, welche für einen wirkungsvollen Hydrolyseschutz verwendet werden, groß, während die Farbstabilisierung von Schmelzklebstoffen durch Carbodiimide in der Schmelze von Schmelzklebstoffen bereits mit relativ geringen Mengen des Additivs erreicht werden kann.

Erfindungsgemäß erhält der Fachmann somit die technische Lehre, Carbodiimide nicht als Hydrolyseschutzmittel, sondern zur Stabilisierung der Farbe von Schmelzklebstoffen in der Schmelze in Kombination mit speziellen Antioxidationsmitteln zu verwenden.

### (1) Antioxidationsmittel

Die für die erfindungsgemäße Verwendung zu verwendeten Antioxidationsmittel werden vorzugsweise ausgewählt aus der Gruppe, aus Antioxidationsmitteln auf Basis von sterisch-gehinderten Phenolen, auf Basis von Tocopherol, auf Basis von Bisbenzotriazolen, auf Basis von Phosphiten, auf Basis von Thiophenyl-bis-benzoxazolderivaten und auf Basis von Benzophenon.

Im Rahmen der vorliegenden Erfindung wird unter dem Begriff "auf Basis von" hinsichtlich der Antioxidationmittel verstanden, dass die Antioxidationsmittel entsprechende Einheiten umfassen, dass heißt, dass im Rahmen der vorliegenden Erfindung beispielsweise unter dem Begriff "auf Basis von sterisch-gehinderten Phenolen" verstanden wird, dass das Antioxidationsmittel mindestens eine Struktureinheit aus einem sterisch-gehinderten Phenol umfasst.

Falls als Antioxidationsmittel auf Basis von einem sterisch-gehinderten Phenol verwendet wird, so kann es sich beispielsweise um Ethylen-bis(oxyethylen)-bis-(3-(5-tert-butyl-4-hydroxy-m-tolyl)-propionat), 1,3,5-Trimethyl-2,4,6-tris(3,5-di-tert-butyl-4-hydroxybenzyl)benzol, Pentaerythritoltetrakis-3-(3,5-di-tert-butyl-4-hydroxyphenyl)propionat, n-Octadecyl-3,5-di-tert-butyl-4-hydroxyphenyl)propionat, 4,4'-Methylen-bis-(2,6-di-tert-butylphenol), 4,4'-Thio-bis-(6-tert-butyl-o-kresol), 2,6-Di-tert-butylphenol, 6-(4-Hydroxyphenoxy)-2,4-bis(n-octylthio)-1,3,5-triazin, Di-n-octadecyl-3,5-di-tert-butyl-4-hydroxybenzylphosphonat, 2-(n-Octylthio)ethyl-3,5-di-tert-butyl-4-hydroxybenzoat, 2-(1,1-Dimethylethyl)-6-[[3-(1,1-dimethylethyl)-2-hydroxy-5-methylphenyl]methyl-4-methylphenyl]acrylat und Sorbitolhexa-[3-(3,5-di-tert-butyl-4-hydroxyphenyl)propionat] handeln. Entsprechende Antioxidationsmittel sind unter der Markenbezeichnung IRGANOX^{®} kommerziell erhältlich. Besondere Vertreter dieser Produktserie sind
- IRGANOX^{®} 245, bei welchem es sich um Ethylen-bis(oxyethylen)-bis-(3-(5-tert-butyl-4-hydroxy-m-tolyl)-propionat) handelt,
- IRGANOX^{®} 3052, bei welchem es sich um 2-(1,1-Dimethylethyl)-6-[[3-(1,1-dimethylethyl)-2-hydroxy-5-methylphenyl]methyl-4-methylphenyl]acrylat handelt.

Falls als Antioxidationsmittel auf Basis von Tocopherol verwendet wird, so kann es sich beispielsweise um α-Tocopherol, β-Tocopherol, 8-Tocopherol und γ-Tocopherol.

Falls als Antioxidationsmittel auf Basis von Bisbenzotriazol verwendet wird, so kann es sich beispielsweise um Hydroxyphenylbenzotriazol und dessen Derivate sowie Hydroxybenzotriazole und dessen Derivate, wie 2-(3',5-'Bis-(1,1-dimethylbenzyl)-2'-hydroxy-phenyl)-benzotriazol (Tinuvint^{®} 234, Ciba Spezialitätenchemie, Basel), 2-(2'-Hydroxy-5'-(tert-octyl)-phenyl)-benzotriazol (Tinuvin^{®} R 329, Ciba Spezialitätenchemie, Basel), 2-(2'-Hydroxy-3'-(2-butyl)-5'-(tert-butyl)-phenyl)-benzotriazol (Tinuvin^{®} 350, Ciba Spezialitätenchemie, Basel), Bis-(3-(2H-benztriazolyl)-2-hydroxy-5-tert-octyl)methan (Tinuvin^{®} 360, Ciba Spezialitätenchemie, Basel), 2-(4-Hexoxy-2-hydroxyphenyl)-4,6-diphenyl-1,3,5-triazin (Tinuvin^{®} 1577, Ciba Spezialitätenchemie, Basel) und 2-(2H-benzotriazol-2-yl)-6-dodecyl-4-methylphenol (Tinuvin^{®} 571, Ciba Spezialitätenchemie, Basel), handeln. Entsprechende Antioxidationsmittel sind, wie bereits erwähnt, beispielsweise unter der Markenbezeichnung TINUVIN^{®} kommerziell erhältlich. Ein besondere Vertreter dieser Produktserie ist das TINUVIN^{®} 213, bei welchem es sich um das Reaktionsprodukt von Methyl-3-(3-(2H-benzotriazol-2-yl)-5-t-butyl-4-hydroxyphenylpropionat mit Polyethylenglykol, wie z.B. PEG 300 handelt.

Falls als Antioxidationsmittel auf Basis von Phosphiten verwendet wird, so kann es sich beispielsweise um Tris-(2,4-di-tert-butylphenyl)phosphit handeln. Dieses Produkt ist beispielsweise erhältlich bei der Firma Ciba Speciality Chemicals Corp. als IRGAFOS^{®} 168.

Falls als Antioxidationsmittel auf Basis von Thiophenyl-bis-benzoxazolderivaten verwendet wird, so kann es sich beispielsweise um Tris-(2,4-di-tert-butylphenyl)phosphit handeln. Ein besonderer Vertreter dieser Produktserie ist das Uvitex^{®} OB.

Falls als Antioxidationsmittel auf Basis von Benzophenon verwendet wird, so kann es sich beispielsweise um Chimasorb^{®} 22 (2,4-Dihydroxy-benzophenon, Ciba Spezialitätenchemie, Basel); Chimasorb^{®} 81, Ciba Spezialitätenchemie, Basel; oder Chimasorb^{®} 90, Ciba Spezialitätenchemie, Basel handeln. Ein besonderer Vertreter dieser Produktserie ist das Chimasorb^{®} 90.

Im Allgemeinen werden die Antioxidationsmittel in Mengen von jeweils zwischen 0,001 Gew.-% und 10 Gew.-%, bevorzugt 0,01 Gew.-% und 5 Gew.-%, besonders bevorzugt 0,01 Gew.-% und 1 Gew.-%, noch weiter bevorzugt zwischen 0,1 und 1 Gew.-%, ganz besonders bevorzugt zwischen 0,2 und 0,6 Gew.-%, jeweils bezogen auf den Schmelzklebstoff / die Schmelzklebstoffzusammensetzung, eingesetzt.

### (2) Schmelzklebstoff

Im Rahmen der vorliegenden Erfindung kann ein beliebiger Schmelzklebstoff verwendet werden, wie diese beispielsweise beschrieben werden in DE 10 2005 030 431, deren diesbezügliche Offenbarung durch Bezugnahme in die vorliegende Erfindung eingeschlossen wird.Es kann sich dabei beispielsweise auch um reaktive oder um nicht-reaktive Schmelzklebstoffe handeln. Solche Schmelzklebstoffe basieren auf polymeren Systemen, welche beispielsweise ausgewählt werden aus der Gruppe, bestehend aus Polyamiden, Copolyamiden, Polyolefinen, Ethylenvinylacetat-Copolymeren, Polyestern, Polyurethanen, Polyacrylaten und Vinylpyrrolidon/Vinylacetat-Copolymeren.

Im Rahmen der vorliegenden Erfindung wird insbesondere ein Schmelzklebstoff verwendet, welcher auf polymeren Systemen basiert, die ausgewählt werden aus der Gruppe, bestehend aus Polyurethanen, Polyamiden, Copolyamiden, Polyolefinen, Ethylenvinylacetat-Copolymeren, Polyestern, Polyacrylaten und Vinylpyrrolidon/Vinylacetat-Copolymeren.

Insbesondere bevorzugt erfolgt die kombinierte Verwendung von mindestens einem Carbodiimid und mindestens einem Antioxidationsmittel in reaktiven Schmelzklebstoffen auf Basis von Polyurethan ((PUR)-Hotmelt).

Im Folgenden werden einige Schmelzklebstoffsysteme näher beschrieben, welche im Rahmen der vorliegenden Erfindung insbesondere bevorzugt sind. Die vorliegende Erfindung ist jedoch nicht auf diese Schmelzklebstoffsysteme beschränkt.

Als Ethylenvinylacetat-Copolymeren sind alle handelsüblichen EVA-Kautschuke einsetzbar. Als Schmelzklebstoffe sind dabei solche Kautschuke mit Vinylactetat-Anteil von bis zu 40% bevorzugt. Diese sind beispielsweise erhältlich als Levamelt® bei der Lanxess Deutschland GmbH oder auch bei der Firma Henkel unter Alcudia EVA oder Escorene.

Polyacrylate im Sinne der Erfindung sind beispielsweise herstellbar durch die Polymerisation oder Copolymerisation von ethylenisch ungesättigten Carbonsäureestern, wie Acrylsäure-, Methacrylsäure-, Crotonsäure- oder Maleinsäureester, wie z.B. beschrieben in DE 10 2005 030 431.

Bei den Vinylpyrrolidon/Vinylacetat-Copolymeren handelt es sich ebenfalls um handelsübliche produkte, die z.B. bei der BASF AG unter dem Handelsnamen Kollidon® erhältlich sind.

### Polyester-Schmelzklebstoffe

Schmelzklebstoffe auf der Basis von Polyestern sind beispielsweise in der EP 0 028 687 A beschrieben, dessen diesbezügliche Offenbarung durch Bezugnahme in die vorliegende Erfindung eingeschlossen wird.

Es handelt sich bei den Polyester-Schmelzklebstoffen um Umsetzungsprodukte aus aliphatischen, cycloaliphatischen oder aromatischen Dicarbonsäuren, die mit aliphatischen cyclischen oder aromatischen Polyolen umgesetzt werden können. Durch Auswahl der Carbonsäuren und der Polyole können kristalline oder teilkristalline Polyester erhalten werden. Üblicherweise werden Dicarbonsäuren und Diole miteinander zur Reaktion gebracht, es ist jedoch auch möglich, dass anteilsweise Tricarbonsäuren oder Triole eingesetzt werden.

### Polyurethan-Schmelzklebstoffe

In der EP 0 434 467 A oder der DE 41 28 274 A, deren diesbezügliche Offenbarung durch Bezugnahme in die vorliegende Erfindung eingeschlossen wird, werden thermoplastische Polyurethane als Schmelzklebstoffe beschrieben. Es handelt sich dabei um Umsetzungsprodukte von Polyolen mit Polyisocyanaten, die gegebenenfalls einen erhöhten Modul aufweisen. Als Polyole können die an und für sich bekannten Polyole auf Basis von Polyethern, Polyestern, Polyacrylaten, Polybutadienen, Polyole auf Basis von pflanzlichen Rohstoffen, wie oleochemische Polyole, eingesetzt werden. Um eine gute Reaktivität zu erzielen, sind üblicherweise zumindest anteilig aromatische Isocyanate enthalten. Durch Auswahl der Polyole und/oder Isocyanate können die Eigenschaften des Prepolymeren beeinflusst werden, beispielsweise der Schmelzpunkt, die Elastizität oder die Haftung. Es sind aber auch reaktive thermoplastische Polyurethane geeignet, die dann nach Applikation gegebenenfalls auch dauerhaft vernetzen können.

Insbesondere bevorzugt eignet sich die vorliegende Erfindung zur Farbstabilisierung von Polyurethan-Schmelzklebstoffen, welche auf Basis von Diphenylmethandiisocyanat (MDI) hergestellt wurden.

Geeignete Polyurethan-Schmelzklebstoffe sind beispielsweise in der WO 95/33783 A1 und der WO 02/090454 A1 beschrieben, deren diesbezügliche Offenbarung durch Bezugnahme in die vorliegende Erfindung eingeschlossen wird.

### Polyolefin-Schmelzklebstoffe

Weiterhin können auch Schmelzklebstoffe auf Basis von Polymerisaten im Rahmen der vorliegenden Erfindung verwendet werden, beispielsweise Polyolefine. Es handelt sich dabei um amorphe, kristalline oder teilkristalline Polyolefine. Entsprechende Beispiele sind Polypropylen oder Polyethylencopolymere. Die Eigenschaften solcher Polymere können über ihr Molekulargewicht und über die einpolymerisierten Comonomeren beeinflusst werden. Solche Schmelzklebstoffe sind zum Beispiel in der WO 2004/039907 A beschrieben, dessen diesbezügliche Offenbarung durch Bezugnahme in die vorliegende Erfindung eingeschlossen wird. In diesem Fall handelt es sich um durch Metallocene-Katalyse hergestellte Polymere, wobei die vorliegende Erfindung nicht auf durch Metallocen-Katalyse hergestellte Polyolefine beschränkt ist. So können ferner auch durch heterogene Katalyse an Titan- und Aluminiumverbindungen hergestellte Polyolefine erfindungsgemäß als Schmelzklebstoffe verwendet werden.

### Polyamid-/Copolyamid-Schmelzklebstoffe

Weitere geeignete Schmelzklebstoffe können beispielsweise Polyamide und/oder Copolyamide sein. Bei den Copolyamiden handelt es sich um kommeziell erhältliche Produkte, wie z.B. Vestamelt® von der Firma Evonik Degussa. Geeignete Polyamide sind beispielsweise in der EP 0 749 463 A, dessen diesbezügliche Offenbarung durch Bezugnahme in die vorliegende Erfindung eingeschlossen wird, beschrieben.

Es handelt sich dabei um Polyamidschmelzklebstoffe auf Basis von Dicarbonsäuren und Polyetherdiaminen. Besonders geeignete Schmelzklebstoffzusammensetzungen sind auch in der EP 0 204 315 A beschrieben. Es handelt sich dabei um Polyesteramide, die auf Basis von Polymerfettsäuren und Polyaminen hergestellt werden.

Beispielsweise können als erfindungsgemäß geeignete Polyamide solche auf Basis von Dimerfettsäure-freien Polyamiden ausgewählt werden. Diese sind herstellbar aus
- 40 bis 50 mol %, vorzugsweise 50 mol %, einer oder mehrerer C₄-C₁₈-Dicarbonsäure(n);
- 5 bis 45 mol %, vorzugsweise 15 bis 40 mol %, mindestens eines aliphatischen Diamines;
- 5 bis 40 mol %, vorzugsweise 20 bis 30 mol %, eines oder mehrerer cycloaliphatischer Diamine;
- 0 bis 40 mol %, vorzugsweise 5 bis 25 mol % Polyetherdiaminen,
wobei die Summe der eingesetzten Diamine 50 mol % ergibt, so dass Dicarbonsäurekomponente und Diaminkomponente in etwa äquivalenten molaren Mengenanteilen vorliegen.

Dabei werden die Dicarbonsäuren vorzugsweise in bis zu 10 % stöchiometischem Überschuss gegenüber den Diaminen eingesetzt, so dass Carboxylterminierte Polyamide entstehen. Das Molekulargewicht der erfindungsgemäß zu verwendenden Polyamide beträgt (berechnet aus der Säurezahl) etwa 10 000 bis 50 000, vorzugsweise 15 000 bis 30 000. Diese erfindungsgemäß geeigneten Polyamide haben eine Viskosität zwischen 5000 und 60 000 mPas, vorzugsweise zwischen 15000 und 50 000 mPas (gemessen bei 200 °C, Brookfield Thermosel RVT, EN ISO 2555).

Beispiele für Dicarbonsäuren zur Herstellung der erfindungsgemässen Polyamide sind insbesondere Adipinsäure, Azelainsäure, Bernsteinsäure, Dodecandisäure, Glutarsäure, Korksäure (Suberinsäure), Maleinsäure, Pimelinsäure, Sebacinsäure, Undecandisäure oder deren Mischungen.

Die Diamin-Komponente besteht im Wesentlichen aus einem oder mehreren aliphatischen Diaminen, vorzugsweise mit einer geraden Anzahl an Kohlenstoffatomen, wobei die Aminogruppen an den Enden der Kohlenstoffketten sind. Die aliphatischen Diamine können 2 bis zu 20 Kohlenstoffatome enthalten, wobei die aliphatische Kette linear oder leicht verzweigt sein kann. Konkrete Beispiele sind Ethylendiamin, Diethylentriamin, Dipropylentriamin, 1,4-Diaminobutan, 1,3-Pentandiamin, Methylpentandiamin, Hexamethylendiamin, Trimethylhexamethylendiamin, 2-(2-aminomethoxy)ethanol, 2-Methypentamethylenediamin, C₁₁-Neopentandiamin, Diaminodipropylmethylamin, 1,12-Diaminododecan. Die besonders bevorzugten aliphatischen Diamine sind C₄-C₁₂-Diamine mit einer geraden Anzahl an Kohlenstoffatomen.

Die Amino-Komponente kann weiterhin cyclische Diamine oder heterocyclische Diamine enthalten wie zum Beispiel 1,4-Cyclohexandiamin, 4,4'-Diaminodicyclohexylmethan, Piperazin, Cyclohexan-bis-(methylamin), Isophorondiamin, Dimethylpiperazin, Dipiperidylpropan, Norbornandiamin oder m-Xylylendiamin. Wenn das Polyaminoamid eine höhere Flexibilität aufweisen soll, können zusätzlich noch Polyoxyalkylendiamine, beispielsweise Polyoxyethylendiamine, Polyoxypropylendiamine oder Bis-(di-aminopropyl)-polytetrahydrofuran, mit verwendet werden. Dabei sind die Polyoxyalkylendiamine besonders bevorzugt.

Weiterhin können Aminocarbonsäuren oder deren cyclische Derivate mit verwendet werden. Beispielhaft erwähnt sein hier 6-Aminohexansäure, 11-Aminoundecansäure, Laurolactam und ε-Caprolactam.

Eine weitere Ausführungsform der erfindungsgemäß geeigneten Schmelzklebstoffe enthält als wesentliche Komponente ein Polyamid auf der Basis von dimerisierter Fettsäure. Dimerisierte Fettsäuren werden durch Kupplung von ungesättigten langkettigen einbasischen Fettsäuren, beipsielsweise von Linolensäure und Ölsäure, erhalten. Die Säuren sind seit langem bekannt und im Handel erhältlich.

Die erfindungsgemäßen Polyamide sind beispielsweise zusammengesetzt aus
- 35 bis 49,5 Mol-% dimerisierte Fettsäure sowie
- 0,5 bis 15 Mol-% monomere Fettsäure mit 12 bis 22 Kohlenstoffatomen und
- 2 bis 35 Mol-% Polyetherdiamine der allgemeinen Formel

   H₂N-R¹-O-(R²O)ₓ-R³-NH₂ (I)

   in der

- x: eine Zahl zwischen 8 und 80, insbesondere zwischen 8 und 40,
- R¹ und R³: gleiche oder verschiedene aliphatische und/oder cyc- loaliphatische Kohlenwasserstoffreste mit vorzugs- weise 2 bis 8 Kohlenstoffatomen,
- R²: einen gegebenenfalls verzweigten aliphatischen Koh- lenwasserstoffrest mit 1 bis 6 Kohlenstoffatomen dar- stellt, und

- 15 bis 48 Mol-% aliphatische Diamine mit 2 bis 40 Kohlenstoffatomen, wobei die dimerisierten Fettsäuren bis zu 65 % durch aliphatische Dicarbonsäuren mit 4 bis 12 Kohlenstoffatomen ersetzt werden können.

Eine andere geeignete Zusammensetzung ist erhältlich aus
- 20 bis 49,5 Mol-% dimerisierter Fettsäure sowie
- 0,5 bis 15 Mol-% monomere Fettsäure mit 12 bis 22 Kohlenstoffatomen und
- 20 bis 55 Mol-% eines wenigstens 2 primäre Aminogruppen tragenden Amins mit 2 bis 40 Kohlenstoffatomen,
wobei die dimerisierten Fettsäuren bis zu 65 % durch aliphatische Dicarbonsäuren mit 4 bis 12 Kohlenstoffatomen ersetzt sein können.

Bezüglich der Aminkomponenten in den Polyamiden sind bevorzugt Polyetherpolyole mit primären Aminoendgruppen geeignet, wie oben bereits aufgeführt. Dabei sind Polyetherpolyole mit Aminoendgruppen bevorzugt, die nicht oder nur geringfügig wasserlöslich sind. Die eingesetzten Polyetherpolyole mit Aminoendgruppen weisen insbesondere Molekulargewichte zwischen 700 und 2 500 g/mol auf. Eine besonders geeignete Rohstoffklasse sind beispielsweise die Bis-(3-aminopropyl)polytetrahydrofurane.

Weiterhin können insbesondere auch primäre Alkylendiamine mit 2 bis 10 Kohlenstoffatomen eingesetzt werden, ausgewählt aus den oben angegebenen Aminen.

Eine weitere geeignete Klasse von Diaminen leitet sich von den Dimerfettsäuren ab und enthält statt der Carboxylgruppen primäre Aminogruppen. Derartige Substanzen werden häufig Dimerdiamine genannt. Sie werden durch Nitrilbildung aus den dimerisierten Fettsäuren und anschließende Hydrierung erhalten.

Als Carbonsäuren sind die oben angeführten aliphatische Dicarbonsäuren einsetzbar. Geeignete aliphatische Carbonsäuren weisen vorzugsweise 4 bis 12 Kohlenstoffatome auf. Durch diese Säuren kann Dimerfettsäure molmäßig bis zu 65 % ersetzt werden. Weiterhin einsetzbar sind langkettige Aminocarbonsäuren wie 11-Aminoundecansäure oder auch Lauryllactam.

Dabei ist es dem Fachmann bekannt, dass durch Zusatz von Sebacinsäure der Schmelzpunkt der Polyamide in gewissen Grenzen erhöht werden kann. In kleinen Mengen können auch die in der Faserchemie bekannten Polyamid-Rohstoffe wie beispielsweise Caprolactam eingesetzt werden. Diese Stoffe erlauben es dem Fachmann, den Schmelzpunkt in gewissen Grenzen zu erhöhen.

Bei der Auswahl der einzusetzenden monofunktionellen, difunktionellen oder trifunktionellen Rohstoffe ist zu berücksichtigen, dass schmelzbare, d.h. nicht vernetzte Produkte erhalten werden. Beispielsweise kann beim Auftreten von Vernetzungen/Vergelungen durch Absenken des Anteils an trifunktionellen Komponenten (Trimerfettsäuren) und/oder Erhöhen des Gehalts an monofunktionellen Aminen oder Fettsäuren zu Polymeren gelangt werden, die nicht zur Vergelung neigen.

Allgemein werden die Mengen der Amin und der Carbonsäuren so gewählt, dass die Polyamide Carboxylgruppen von 1-120 meq/kg Festkörper aufweisen, insbesondere zwischen 10 bis 100 meq/kg. Alternativ kann auch mit einem Überschuss an Aminen gearbeitet werden, dann soll ein Amingehalt zwischen 1-140 meq/kg Festköper erhalten werden, insbesondere zwischen 10 bis 100 meq/kg. Das Molekulargewicht (gemessen als zahlenmittleres Molekulargewicht, wie über GPC erhältlich) kann zwischen 30000 bis 300000 g/mol betragen, insbesondere zwischen 50000 bis zu 150000 g/mol. Die Viskosität der Polyamide soll zwischen 5000 bis zu 100000 mPas betragen (gemessen bei 200 °C), insbesondere bis zu 50000 mPas.

Weiterhin können die erfindungsgemäß geeigneten Schmelzklebstoffe - neben dem Carbodiimid und dem Antioxidationsmittel weitere übliche Zusätze enthalten. Beispiele dafür sind klebrig machende Harze, wie z.B. Abietinsäure, Abietinsäureester, Terpenharze, Terpenphenolharze oder Kohlenwasserstoffharze; Füllstoffe, z.B. Silikate, Talk, Calciumcarbonate, Tone, Russ oder Pigmente; Stabilisatoren, z.B. vom Typ der sterisch gehinderten Phenole oder der aromatischen Aminderivate; faserförmige Additive, wie natürliche Fasern, Kunststoff- oder Glasfasern. Allgemein sollen diese Zusätze als Summe nicht mehr als 15 Gew.-% in einem erfindungsgemäßen Schmelzklebstoff enthalten sein.

### (3) Carbodiimide

Die erfindungsgemäß bevorzugt zu verwendende Carbodiimidverbindung unterliegt im Hinblick auf ihre chemische Struktur zunächst keiner besonderen Anforderung, solange das Carbodiimid in der Lage ist, die Farbe von Schmelzklebstoffen im Sinne der vorliegenden Erfindung zu stabilisieren.

Als eine Carbodiimidverbindung, die in der vorliegenden Erfindung verwendet werden kann, können diejenigen, die durch allgemein bekannte Verfahren synthetisiert werden, verwendet werden. Die Verbindung kann beispielsweise mittels Durchführen einer Decarboxylierungskondensationsreaktion von verschiedenen Polyisocyanaten unter Verwendung einer Organophosphorverbindung oder einer Organometallverbindung als Carbodiimidisierungskatalysator bei einer Temperatur von nicht weniger als etwa 70 °C ohne Verwendung von irgendeinem Lösungsmittel oder Verwendung eines inerten Lösungsmittels erhalten werden.

Beispiele einer Monocarbodiimidverbindung, die in den oben beschriebenen Carbodiimidverbindungen enthalten ist, sind Dicyclohexylcarbodiimid, Diisopropylcarbodiimid, Dimethylcarbodiimid, Diisobutylcarbodiimid, Dioctylcarbodiimid, tert.-Butylisopropylcarbodiimid, 2,6-Diisopropylphenylencarbodiimid Diphenylcarbodiimid, Di-tert.-butylcarbodiimid und Di-β-naphthylcarbodiimid, wobei Dicyclohexylcarbodiimid oder Diisopropylcarbodiimid besonders bevorzugt im Hinblick auf die industriellen Anwendbarkeit ist.

Entsprechende Verfahren zur Herstellung von Carbodiimiden und entsprechend geeignete Verbindungen sind beispielsweise beschrieben in US 2,941,956J. Org. Chem. 28, 2069-2075 (1963) und Chemical Review, 1981, Bd. 81, Nr. 4, Seite 619 bis 621.

Ein organisches Diisocyanat als ein Ausgangsmaterial zur Herstellung einer Polycarbodiimidverbindung umfaßt beispielsweise aromatisches Diisocyanat, aliphatisches Diisocyanat, alicyclisches Diisocyanat oder ein Gemisch davon, und umfaßt speziell 1,5-Naphthalindiisocyanat, 4,4'-Diphenylmethandiisocyanat, 4,4'-Diphe-nyldimethylmethandiisocyanat, 1,3-Phenylendiisocyanat, 1,4-Phenylendiisocyanat, 2,4-Tolylendiisocyanat, 2,6-Tolylendiisocyanat, ein Gemisch aus 2,4-Tolylendiisocyanat und 2,6-Tolylendiisocyanat, Hexamethylendii-socyanat, Cyclohexan-1,4-diisocyanat, Xylylendiisocyanat, Isophorondiisocyanat, Dicyclohexylmethan-4,4'-diisocyanat, Methylcyclohexandiisocyanat, Tetramethylxylylendiisocyanat, 2,6-Diisopropylphenylenisocyanat und l,3,5-Triisopropylbenzol-2,4-diisocyanat.

Außerdem kann bei der oben beschriebenen Polycarbodiimidverbindung ihr Polymerisationsgrad auf ein geeignetes Niveau unter Verwendung einer Verbindung, wie Monoisocyanat, die zur Umsetzung mit einer terminalen Isocyanatgruppe der Polycarbodiimidverbindung fähig ist, kontrolliert werden.

Das Monoisocyanat zur Kontrolle des Polymerisationsgrades durch Schützen einer terminalen Gruppe der Polycarbodiimidverbindung umfaßt Phenylisocyanat, Tolylisocyanat, Dimethylphenylisocyanat, Cyclohexy-lisocyanat, Butylisocyanat und Naphthylisocyanat.

Außerdem ist das terminate Schutzmittel zur Kontrolle des Polymerisationsgrades durch Schützen einer terminalen Gruppe der Polycarbodiimidverbindung nicht auf die oben beschriebenen Monoisocyanate beschränkt und umfasst Verbindungen mit einem aktiven Wasserstoff, der zur Umsetzung mit Isocyanat fähig ist, beispielsweise (i) eine aliphatische, aromatische oder alicyclische Verbindung mit einer -OH-Gruppe, wie Methanol, Ethanol, Phenol, Cyclohexanol, N-Methylethanolamin, Oligo-, Polyethylenglykolmonomethylether und Oligo-, Polypropylenglykolmonoalkylether, Fett- und Oleylalkohole; (ii) eine Verbindung mit einer =NH-Gruppe, wie Diethylamin und Dicyclohe-xylamin; (iii) eine Verbindung mit eine =NH₂-Gruppe, wie Butylamin und Cyclohexylamin; (iv) eine Verbindung mit einer-COOH-Gruppe, wie Bernsteinsäure, Benzoesäure und Cyclohexancarbonsäure; (v) eine Verbindung mit einer -SH-Gruppe, wie Ethylmercaptan, Allylmercaptan und Thiophenol; und (vi) eine Verbindung mit einer Epoxidgruppe.

Die Decarboxylierungskondensationsreaktion des oben beschriebenen organischen Diisocyanats wird in Gegenwart eines geeigneten Carbodiimidierungskatalysators durchgeführt. Als Carbodiimidierungskatalysator, der verwendet werden soll, sind eine Organophosphorverbindung und eine Organometallverbindung [eine Verbindung, ausgedrückt durch die allgemeine Formel M-(OR)₄, worin M Titan (Ti), Natrium (Na), Kalium (K), Vanadium (V), Wolfram (W), Hafnium (Hf), Zirkonium (Zr), Blei (Pb), Mangan (Mn), Nickel (Ni), Calcium (Ca) und Barium (Ba) und dergleichen ist; R eine Alkylgruppe oder Arylgruppe mit 1 bis 20 Kohlenstoffatomen ist] bevorzugt, und Phospholenoxid unter den Organophosphorverbindungen und Alkoxide von Titan, Hafnium und Zirkonium unter den Organometallverbindungen sind aus Sicht der Aktivität besonders bevorzugt. Weiter zu erwähnen sind starke Basen, beispielsweise Alkali- und Erdalkalihydroxide oder -oxide, Alkoholate und Phenolate.

Die oben beschriebenen Phospholenoxide umfassen speziell 3-Methyl-1-phenyl-2-phospholen-1-oxid, 3-Methyl-1-ethyl-2-phospholen-1-oxid, 1,3-Dimethyl-2-phospholen-1-oxid, 1-Phenyl-2-phospholen-1-oxid, 1-Ethyl-2-phospholen-1-oxid, 1-Methyl-2-phospholen-1-oxid und Doppelbindungsisomere davon. Von denen ist aufgrund der leichten industriellen Verfügbarkeit 3-Methyl-1-phenyl-2-phospholen-1-oxid besonders bevorzugt.

Die Carbodiimidverbindung ist insbesondere 4,4'-Dicyclohexylmethancarbodiimid (Polymerisationsgrad = 2 bis 20), Tetramethylxylylencarbodiimid (Polymerisationsgrad = 2 bis 20), N,N-Dimethylphenylcarbodiimid (Polymerisationsgrad = 2 bis 20) und N,N'-Di-2,6-diisopropylphenylencarbodiimid (Polymerisationsgrad = 2 bis 20) und dergleichen, und ist nicht speziell beschränkt, so lange wie die Verbindung mindestens eine Carbodiimidgruppe in einem Molekül mit der Funktion aufweist.

Im Rahmen der vorliegenden Erfindung geeignete Carbodiimide sind insbesondere monomere, dimere oder polymere Carbodiimide.

Im Folgenden werden mehrere bevorzugte Ausgestaltungen der carbodiimidverbindung näher erläutert.

Carbodiimide im Sinne der Erfindung sind vorzugsweise Verbindungen der allgemeinen Formel

R'-(-N=C=N-R-)ₙ-R" (I)

in der
- R einen aromatischen, aliphatischen, cycloaliphatischen oder araliphatischen Rest bedeutet, der in dem Fall eines aromatischen oder eines araliphatischen Restes in einer ortho-Stellung, bevorzugt in beiden ortho-Stellungen zum aromatischen Kohlenstoffatom, das die Carbodiimidgruppe trägt, aliphatische und/oder cycloaliphatische Substituenten mit mindestens 2 Kohlenstoffatomen, bevorzugt verzweigte oder cyclische aliphatische Reste mit mindestens 3 Kohlenstoffatomen, insbesondere Isopropylgruppen, tragen kann,
- R' gleich Aryl, Aralkyl oder R-NCO, R-NHCONHR¹, R-NHCONR¹R² und R-NHCOOR³ bedeutet,
- R" gleich -N=C=N-Aryl, -N=C=N-Alkyl, -N=C=N-Cycloaliphat, -N=C=N-Aralkyl, -NCO, -NHCONHR¹, -NHCONR¹R² oder NHCOOR³ bedeutet,
- wobei in R' und in R" unabhängig voneinander R¹ und R² gleich oder verschieden sind und einen Alkyl-, Cycloalkyl- oder Aralkylrest darstellen und R³ eine der Bedeutungen von R¹ hat oder einen Polyester- oder einen Polyamidrest bedeutet und
- n eine ganze Zahl von 1 bis 5.000, bevorzugt von 1 bis 500, darstellt.

In einer **ersten Ausgestaltung** wird im Rahmen der vorliegenden Erfindung ein MonoCarbodiimid (monomer) verwendet. Dabei handelt es sich vorzugsweise um Verbindungen der Formel I mit n=1, wobei R¹ bis R⁴ die oben genannte Bedeutung haben. Besonders bevorzugt weist das MonoCarbodiimid
die nachstehende allgemeine Formel (II) auf 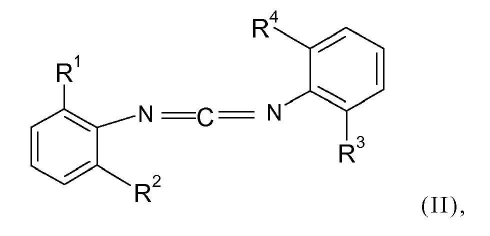 in welcher die Reste R¹ bis R⁴, jeweils unabhängig voneinander, einem geradkettigen oder verzweigten C₂- bis C₂₀-Alkylrest, einem C₂- bis C₂₀-Cycloalkylrest, einem C₆- bis C₁₅-Arylrest oder einem C₆- bis C₁₅-Aralkylrest entsprechen.

Bevorzugt für die Reste R¹ bis R⁴ sind C₂-C₂₀-Alkyl- und/oder C₂-C₂₀-Cycloalkylreste.

Besonders bevorzugt für die Reste R¹ bis R⁴ sind C₂-C₂₀-Alkylreste.

Unter C₂-C₂₀-Alkyl- und/oder C₂-C₂₀-Cycloalkylreste versteht man im Rahmen der vorliegenden Erfindung insbesondere Ethyl-, Propyl-, Isopropyl-, sec.-Butyl-, tert.-Butyl, Cyclohexyl- und Dodecylreste, wobei der Isopropylrest besonders bevorzugt ist.

Unter C₆- bis C₁₅-Aryl- und/oder C₆- bis C₁₅-Aralkylreste versteht man im Rahmen der vorliegenden Erfindung insbesondere Phenyl-, Tolyl-, Benzyl- und Naphthylreste.

Ein entsprechendes Carbodiimid ist von der Firma Rhein Chemie Rheinau GmbH kommerziell unter den Bezeichnung Additin^{®} 8500, Stabaxol^{®} I bzw. Stabaxol^{®} I LF erhältlich. Auch die von der Firma Rasching vertriebenen Produkte mit der Bezeichnung Stabilisator 3000, 7000 und 7000 A können im Rahmen der vorliegenden Erfindung verwendet werden.

In einer **zweiten Ausgestaltung** wird im Rahmen der vorliegenden Erfindung ein polymeres Carbodiimid verwendet.

Ein entsprechendes polymeres Carbodiimid weist die allgemeine Formel (I) auf

R'-(-N=C=N-R-)ₙ-R" (I)

in der
- R einen aromatischen, aliphatischen, cycloaliphatischen oder araliphatischen Rest bedeutet, der in dem Fall eines aromatischen oder eines araliphatischen Restes in einer ortho-Stellung, bevorzugt in beiden ortho-Stellungen zum aromatischen Kohlenstoffatom, das die Carbodiimidgruppe trägt, aliphatische und/oder cycloaliphatische Substituenten mit mindestens 2 Kohlenstoffatomen, bevorzugt verzweigte oder cyclische aliphatische Reste mit mindestens 3 Kohlenstoffatomen, insbesondere Isopropylgruppen, tragen kann,
- R' gleich Aryl, Aralkyl oder R-NCO, R-NHCONHR¹, R-NHCONR¹R² und R-NHCOOR³ bedeutet,
- R" gleich -N=C=N-Aryl, -N=C=N-Alkyl, -N=C=N-Cycloaliphat, -N=C=N-Aralkyl, -NCO, -NHCONHR¹, -NHCONR¹R² oder NHCOOR³ bedeutet,
- wobei in R' und in R" unabhängig voneinander R¹ und R² gleich oder verschieden sind und einen Alkyl-, Cycloalkyl- oder Aralkylrest darstellen und R³ eine der Bedeutungen von R¹ hat oder einen Polyester- oder einen Polyamidrest bedeutet und
- n eine ganze Zahl von 2 bis 5.000, bevorzugt von 2 bis 500, darstellt.

In einer **ersten bevorzugten Ausbildung** dieser polymeren Carbodiimide steht R für einen aromatischen oder araliphatischen Rest, der in mindestens einer ortho-Stellung, bevorzugt in beiden ortho-Stellungen zum aromatischen Kohlenstoffatom, das die Carbodiimidgruppe trägt, aliphatische und/oder cycloaliphatische Substituenten mit mindestens 2 Kohlenstoffatomen, bevorzugt verzweigte oder cyclische aliphatische Reste mit mindestens 3 Kohlenstoffatomen, insbesondere Isopropylgruppen, trägt.

Besonders geeignet sind solche Carbodiimide der allgemeinen Formeln (I) und (II), die in den ortho-Stellungen zur Carbodiimidgruppe durch Isopropyl substituiert sind und die in der para-Stellung zur Carbodiimidgruppe ebenfalls durch Isopropyl substituiert sind.

In einer **zweiten bevorzugten Ausbildung** dieser polymeren Carbodiimide steht R für einen aromatischen Rest, der über einen C₁- bis C₈-Alkylrest, vorzugsweise C₁- bis C₄-Alkylrest, mit der Carbodiimidgruppe (-N=C=N-) verbunden ist.

Ferner können auch polymere aliphatische Carbodiimide, beispielsweise auf Basis von Isophorondiisocyanat oder H12-MDI (hydriertes MDI) welche von der Firma Nishinbo^{®} erhältlich sind, verwendet werden.

Zur Herstellung der Carbodiimide und/oder Polycarbodiimide der allgemeinen Formel (I) bzw. (II) können Monoisocyanate und/oder Diisocyanate verwendet werden, welche durch Kondensation unter Abspaltung von Kohlendioxid bei erhöhten Temperaturen, z.B. bei 40 °C bis 200 °C, in Gegenwart von Katalysatoren zu den entsprechenden Carbodiimiden umgesetzt werden. Geeignete Verfahren werden in DE-A-11 30 594 und in der FR 1 180 370 beschrieben. Als Katalysatoren haben sich z.B. starke Basen oder Phosphorverbindungen bewährt. Vorzugsweise werden Phospholenoxide, Phospholidine oder Phospholinoxide sowie die entsprechenden Sulfide verwendet. Ferner können als Katalysatoren tertiäre Amine, basisch reagierende Metallverbindungen, Carbonsäuremetallsalze und nicht basische Organometallverbindungen verwendet werden.

Zur Herstellung der eingesetzten Carbodiimide und/oder Polycarbodiimide eignen sich alle Isocyanate, wobei im Rahmen der vorliegenden Erfindung bevorzugt Carbodiimide und/oder Polycarbodiimide verwendet werden, die auf durch C₁- bis C₄-Alkyl substituierten aromatischen Isocyanaten wie z.B. 2,6-Diisopropylphenylisocyanat, 2,4,6-Triisopropylphenyl-1,3-diisocyanat, 2,4,6-Triethylphenyl-1,3-diisocyanat, 2,4,6-Trimethylphenyl-1,3-diisocyanat, 2,4'-Diisocyanatodiphenylmethan, 3,3',5,5'-Tetraisopropyl-4,4'-diisocyanatodiphenylmethan, 3,3',5,5'-Tetraethyl-4,4'-diisocyanatodiphenylmethan, Tetramethylxyloldiisocyanat oder deren Gemische, und auf substituierte Aralkyle, wie 1,3-Bis-(1-methyl-1-isocyanato-ethyl)-benzol basieren. Besonders bevorzugt ist es, wenn die Carbodiimide und/oder Polycarbodiimide auf 2,4,6-Triisopropylphenyl-1,3-diisocyanat basieren.

Polycarbodiimide können außerdem, wenn sie aus Isocyanaten hergestellt worden sind, noch reaktionsfähige NCO-Gruppen und komplex gebundene monomere Isocyanate enthalten.

Diese NCO-Gruppen-haltigen Polycarbodiimide können in der Weise modifiziert werden, dass die vorhandenen Isocyanatgruppen mit reaktionsfähigen, Wasserstoff enthaltenden Verbindungen wie Alkoholen, Phenolen oder Aminen beseitigt werden (vgl. DE 11 56 401 A und DE 24 19 968 A). Diesbezüglich ist insbesondere auch auf die Verwendung von Polypropylenglykolmonoalkylether, Fett- und Oleylalkoholresten zur Endcappung zu verweisen.

Die polymeren Carbodiimide der allgemeinen Formel (II) können ferner mit I-socyanatverbindungen endgecappt sein.

Polymere Carbodiimide im Sinne der vorliegenden Erfindung sind von der Firma Rhein Chemie Rheinau GmbH kommerziell unter den Bezeichnung Stabaxol^{®} P, Stabaxol^{®} P100, Stabaxol^{®} P200 bzw. Stabaxol^{®} P400 erhältlich. Auch die von der Firma Rasching vertriebenen Produkte mit der Bezeichnung Stabilisator 2000, 9000 und 11000 können im Rahmen der vorliegenden Erfindung verwendet werden.

Die Carbodiimide können im Rahmen der vorliegenden Erfindung auch als Gemische mehrerer Carbodiimide verwendet werden.

In einer weiteren Ausführungsform der vorliegenden Erfindung ist es also auch möglich, dass eine Mischung verschiedener Carbodiimide verwendet wird. Wenn eine Mischung von Carbodiimide verwendet wird, so können die verwendeten Carbodiimide ausgewählt sein aus der Gruppe der monomeren, dimeren oder polymeren Carbodiimide, wobei im Hinblick auf die monomeren Carbodiimide und die polymeren Carbodiimide auf obige Ausführungen im Hinblick auf die Verbindungen der allgemeinen Formeln (I) und (II) verwiesen wird.

Darüber hinaus ist es im Sinne der vorliegenden Erfindung bevorzugt, wenn Carbodiimide verwendet werden, welche einen reduzierten Gehalt an freien Isocyanaten enthalten. Bevorzugte Carbodiimide enthalten vorzugsweise weniger als 1 Gew.-% an freien Isocyanaten.

Im Allgemeinen werden die Carbodiimidverbindungen in Mengen von jeweils zwischen 0,001 Gew.-% und 10 Gew.-%, bevorzugt 0,01 Gew.-% und 5 Gew.-%, besonders bevorzugt 0,01 Gew.-% und 1 Gew.-%, noch weiter bevorzugt zwischen 0,1 und 1 Gew.-%, ganz besonders bevorzugt zwischen 0,2 und 0,8 Gew.-%, jeweils bezogen auf den Schmelzklebstoff / die Schmelzklebstoffzusammensetzung, eingesetzt.

Antioxidationsmittel und Carbodiimidverbindung können in jedem beliebigen Verhältnis zueinander eingesetzt werden. Bevorzugt werden Antioxidationsmittel zu Carbodiimidverbindung im Verhältnis 1: 2 bis 1:4 eingesetzt.

Die erfindungsgemäß zu verwendenden Carbodimide zur Farbstabilisierung der Schmelzklebstoffe werden zusammen mit dem Antioxidationsmittel vorzugsweise nach Herstellung der Schmelzklebstoffe mit diesen vermischt. Dieses Verfahren ist ebenfalls Gegenstand der vorliegenden Erfindung. Beispielsweise können die erfindungsgemäß zu verwendenden Carbodiimide und/oder Polycarbodiimide zusammen mit dem Antioxidationsmittel direkt mit den Schmelzklebstoffen zu einem Blend vermischt werden. Die Mischung kann dabei auf den für die Kunststoffverarbeitung typischen Mischaggregaten durchgeführt werden (DIN 24450, Saechtling-Kunststofftaschenbuch). Besonders geeignet als Mischaggregate sind Kneter, Einschneckenextruder, Doppelschneckenextruder, Kaskadenextruder, Entgasungs-Extruder, Mehrschneckenextruder und Planetwalzenextruder, Reaktor- und Kesselvorrichtungen. Üblicherweise arbeitet man oberhalb der Schmelztemperatur mindestens einer der Komponenten.

Bei der Herstellung der erfindungsgemäßen Schmelzklebstoffe können noch weitere bekannte Additive wie z.B. Stabilisatoren, Füllstoffe, Farbstoffe, Flammschutzmittel und Gleitmittel eingearbeitet werden.

Im Rahmen der vorliegenden Erfindung kann der Schmelzklebstoff beispielsweise in einem Bereich der Verpackungsindustrie, insbesondere zum Verkleben von Kartons, Briefumschlägen und Beuteln; der Kleidung, insbesondere zum Einkleben von Schulterpolstern in Jacketts, der Ölfilter, insbesondere in Fahrzeugen zum Einkleben von Papierrollen in das Gehäuse; der Elektrotechnik, insbesondere beim Umspritzen von Bauteilen und Elektroniken als Gehäuseersatz; der Kabeldurchführungen und Dichtungsmuffen, insbesondere für Leitungen in Kraftfahrzeugen; der Möbel- und Holzindustie; der Laminiertechnik; der Schuhindustrie; der Windeln, insbesondere zum Verkleben der saugfähigen Vliese in die Hülle; der Teppichindustrie; im Heimwerkerbereich, insbesondere in der Form von Schmelzklebepistolen mit Klebstoffkerzen; und des Buchbinden, insbesondere zum Anbringen des Umschlags am Buch; eingesetzt wird.

Die vorliegende Erfindung wird anhand der nachfolgend dargestellten Beispiele näher erläutert, welche die Erfindung jedoch keineswegs beschränken.

### Ausführungsbeispiele:

### Beispiel 1:

Es wurde ein Schmelzklebstoff auf Basis von Dynacoll^{®} 7360 hergestellt und dieser entsprechend der nachfolgenden Tabelle additiviert:
(1) 2 % Stabaxol^{®} P200 als polymeres Carbodiimid auf Basis von Tetramethylxyloldiisocyanat, endgekappt mit Polyethylenglykolmonomethylether
(2) 0,8 % Stabaxol^{®} P200 und 0,24 % Irganox^{®} 3052 (2-(1,1-Dimethylethyl)-6-[[3-(1,1-dimethylethyl)-2-hydroxy-5-methylphenyl]methyl-4-methylphenyl]acrylat)

Alle Mengenangaben sind in Gew.-%.

Der Schmelzklebstoff wurde wie folgt hergestellt:
Dynacoll^{®}, welcher kommerziell erhältlich ist von der Firma Evonik Degussa, ist ein linearer Copolyester mit primären Hydroxylfunktionen und einem mittleren molekularen Gewicht.

Zunächst wird der Copolyester für 30 Minuten und bei 120 °C evakuiert. Anschließend erfolgt die Zugabe von 11,67 Gew.% Diphenylmethandiisocyanat (MDI), bezogen auf die Gesamtformulierung,und es wird für 60 Minuten bei 120 °C umgesetzt.

Anschließend werden die Additive in den Schmelzklebstoff eingearbeitet und eine Einwirkzeit der Additive von 1 Stunde sichergestellt.

Die so hergestellten und additivierten Schmelzklebstoffe (Hot-Melt) wurden in einer Kartusche einer Temperaturalterung bei 130 °C für 48 Stunden unterworfen. Die Temperaturalterung wurde in einer Alukartusche (Licht- und Feuchtigkeitsdicht) abgefüllt und im Umluftofen für 48 Stunden bei 130 °C gealtert.

### Die Auswertung erfolgte wie folgt:

### CIELab-Messung:

Im CIELab-Farbraum (CIE*L*a*b) bezeichnet der L-Wert die Luminanz, bzw. die psychometrische Helligkeit (von Schwarz bis Weiß). Die a-Werte reichen von -100 (grün) bis +100 (rot), die b-Werte von -100 (blau) bis +100 (gelb). Je näher die a- und b-Werte bei Null liegen, desto neutraler ist der Farbton. L=50 und a=0/b=0 entspricht einem mittleren, absolut neutralen Grau.

### Anzahl der Bestimmungen: 1

- Geräte:: LICO 200
11 mm Rundküvette

### Durchführung der Messung:

Die Hotmelt-Kartusche wird in den Trockenschrank bei 130 °C getrocknet.

Eine Stunde vor der erwünschten Thermoalterungszeit wird die Probe entnommen. Aus der Kartusche wird die Probe in eine 11 mm Rundküvette überführt. Die Messprobe wird nochmals in einen Vakuumtrockenschrank bei 130 °C für eine weitere Stunde unter Vakuum (um die Gasblasen aus der Meßprobe rauszuziehen) gealtert. Wenn die komplette erwünschte Thermoalterungszeit abgelaufen ist, werden die CIELab-Werte wie folgt beschrieben mit dem Gerät "LICO 200" (Hersteller: Dr. Lange, Berlin) gemessen.

Das Gerät "LICO 200" wird kalibriert. Die Messprobe wird in eine 11mm Rundküvette gefüllt, in die Messöffnung gesteckt und die Messung gestartet.

### Auswertung:

Nach der Messung werden die Farbwerte im konfigurierten Farbsystem angezeigt.

| Probe 1 Vergleich | ohne Alterung | nach Alterung |
|---|---|---|
| L Helligkeit | 95,8 | 92,9 |
| b-Wert | 13,8 | 28,4 |
| a-Wert | -1,9 | -0,6 |
| L Helligkeit | 96,3 | 94,7 |
| b-Wert | 14,2 | 24,6 |
| a-Wert | -1,9 | -1,9 |

### Resümee:

Diese Versuche zeigen, dass die durch die Verwendung von Carbodiimiden in Kombination mit Antioxidationsmitteln eine wirkungsvolle Farbstabilisierung erreicht werden kann.

## Patentansprüche

1. Schmelzklebstoffzusammensetzung, **dadurch gekennzeichnet, dass** die Zusammensetzung mindestens ein Antioxidationsmittel und mindestens eine Carbodiimidverbindung umfasst.

2. Schmelzklebstoffzusammensetzung nach Anspruch 1, **dadurch gekennzeichnet, dass** das mindestens eine Antioxidationsmittel in Mengen von zwischen 0,001 Gew.-% und 10 Gew.-%, bezogen auf den Schmelzklebstoff, verwendet wird.

3. Schmelzklebstoffzusammensetzung nach Anspruch 1 oder2, **dadurch gekennzeichnet, dass** die mindestens eine Carbodiimidverbindung in Mengen von zwischen 0,001 Gew.-% und 10 Gew.-%, bezogen auf den Schmelzklebstoff, verwendet wird.

4. Schmelzklebstoffzusammensetzung nach einem der Ansprüche 1 bis 3, **dadurch gekennzeichnet, dass** es sich bei dem Schmelzklebstoff um eine Schmelzklebstoffzusammensetzung auf Basis von Polyurethan, Polyamid, Copolyamid, Polyolefin, Ethylenvinylacetat-Copolymer, Polyester, Polyacrylat und Vinylpyrrolidon/Vinylacetat-Copolymer handelt.

5. Schmelzklebstoffzusammensetzung nach einem der Ansprüche 1 bis 4, **dadurch gekennzeichnet, dass** die Antioxidationsmittel ausgewählt wurden aus der Gruppe von sterisch-gehindertem Phenol, Tocopherol, Bisbenzotriazol, Phosphit, Thiophenyl-bis-benzoxazolderivaten und/oder Benzophenon

6. Schmelzklebstoffzusammensetzung nach einem der Ansprüche 1 bis 4, **dadurch gekennzeichnet, dass** die Carbodiimidverbindung eine Verbindung der Formel (I) R'-(-N=C=N-R-)ₙ-R" (I) ist,
in der
- R einen aromatischen, aliphatischen, cycloaliphatischen oder araliphatischen Rest bedeutet, der in dem Fall eines aromatischen oder eines araliphatischen Restes in einer ortho-Stellung, bevorzugt in beiden ortho-Stellungen zum aromatischen Kohlenstoffatom, das die Carbodiimidgruppe trägt, aliphatische und/oder cycloaliphatische Substituenten mit mindestens 2 Kohlenstoffatomen, bevorzugt verzweigte oder cyclische aliphatische Reste mit mindestens 3 Kohlenstoffatomen, insbesondere Isopropylgruppen, tragen kann,
- R' gleich Aryl, Aralkyl oder R-NCO, R-NHCONHR¹, R-NHCONR¹R² und R-NHCOOR³ bedeutet,
- R" gleich -N=C=N-Aryl, -N=C=N-Alkyl, -N=C=N-Cycloaliphat, -N=C=N-Aralkyl, -NCO, -NHCONHR¹, -NHCONR¹R² oder NHCOOR³ bedeutet,
- wobei in R' und in R" unabhängig voneinander R¹ und R² gleich oder verschieden sind und einen Alkyl-, Cycloalkyl- oder Aralkylrest darstellen und R³ eine der Bedeutungen von R¹ hat oder einen Polyester- oder einen Polyamidrest bedeutet und
n eine ganze Zahl von 1 bis 5.000 darstellt.

7. Verwendung von mindestens einer Carbodiimidverbindung zur Farbstabilisierung von Schmelzklebstoffen in der Schmelze.

8. Verwendung nach Anspruch 7, **dadurch gekennzeichnet, dass** das mindestens eine Antioxidationsmittel in Mengen von zwischen 0,001 Gew.-% und 10 Gew.-%, bezogen auf den Schmelzklebstoff, verwendet wird.

9. Verwendung nach einem der Ansprüche 7 oder 8, **dadurch gekennzeichnet, dass** die mindestens eine Carbodiimidverbindung in Mengen von zwischen 0,001 Gew.-% und 10 Gew.-%, bezogen auf den Schmelzklebstoff, verwendet wird.

10. Verwendung nach einem der Ansprüche 7 bis 9, **dadurch gekennzeichnet, dass** der Schmelzklebstoff in einem Bereich der Verpackungsindustrie, insbesondere zum Verkleben von Kartons, Briefumschlägen und Beuteln; der Kleidung, insbesondere zum Einkleben von Schulterpolstern in Jacketts, der Ölfilter, insbesondere in Fahrzeugen zum Einkleben von Papierrollen in das Gehäuse; der Elektrotechnik, insbesondere beim Umspritzen von Bauteilen und Elektroniken als Gehäuseersatz; der Kabeldurchführungen und Dichtungsmuffen, insbesondere für Leitungen in Kraftfahrzeugen; der Möbel- und Holzindustie; der Laminiertechnik; der Schuhindustrie; der Windeln, insbesondere zum Verkleben der saugfähigen Vliese in die Hülle; der Teppichindustrie; im Heimwerkerbereich, insbesondere in der Form von Schmelzklebepistolen mit Klebstoffkerzen; und des Buchbinden, insbesondere zum Anbringen des Umschlags am Buch; verwendet wird.

11. Verfahren zur Herstellung von einer Schmelzklebstoffzusammensetzung, **dadurch gekennzeichnet, dass** nach Herstellung des Schmelzklebstoffes mindestens ein Carbodimid zur Farbstabilisierung des Schmelzklebstoffs zusammen mit mindestens einem Antioxidationsmittel vermischt werden.

12. Verfahren nach Anspruch 10 zur Herstellung eines Schmelzklebstoffes gemäß einem der Ansprüche 1 bis 6.

13. Schmelzklebstoffzusammensetzung, erhältlich gemäß einem Verfahren nach Anspruch 11 oder 12.

## Geänderte Patentansprüche

### Geänderte Patentansprüche gemäss Regel 137(2) EPÜ.

**1.** Schmelzklebstoffzusammensetzung, **dadurch gekennzeichnet, dass** die Zusammensetzung mindestens 2-(1,1-Dimethylethyl)-6-[[3-(1,1-dimethylethyl)-2-hydroxy-5-methylphenyl]methyl-4-methylphenyl]acrylat als Antioxidationsmittel und mindestens eine Carbodiimidverbindung umfasst.

**2.** Schmelzklebstoffzusammensetzung nach Anspruch 1, **dadurch gekennzeichnet, dass** das mindestens eine Antioxidationsmittel in Mengen von zwischen 0,001 Gew.-% und 10 Gew.-%, bezogen auf den Schmelzklebstoff, verwendet wird.

**3.** Schmelzklebstoffzusammensetzung nach Anspruch 1 oder 2, **dadurch gekennzeichnet, dass** die mindestens eine Carbodiimidverbindung in Mengen von zwischen 0,001 Gew.-% und 10 Gew.-%, bezogen auf den Schmelzklebstoff, verwendet wird.

**4.** Schmelzklebstoffzusammensetzung nach einem der Ansprüche 1 bis 3, **dadurch gekennzeichnet, dass** es sich bei dem Schmelzklebstoff um eine Schmelzklebstoffzusammensetzung auf Basis von Polyurethan, Polyamid, Copolyamid, Polyolefin, Ethylenvinylacetat-Copolymer, Polyester, Polyacrylat und Vinylpyrrolidon/Vinylacetat-Copolymer handelt.

**5.** Schmelzklebstoffzusammensetzung nach einem der Ansprüche 1 bis 4, **dadurch gekennzeichnet, dass** diese zusätzlich Antioxidationsmittel enthalten, die ausgewählt werden aus der Gruppe von sterisch-gehindertem Phenol, Tocopherol, Bisbenzotriazol, Phosphit, Thiophenyl-bisbenzoxazolderivaten und/oder Benzophenon.

**6.** Schmelzklebstoffzusammensetzung nach einem der Ansprüche 1 bis 4, **dadurch gekennzeichnet, dass** die Carbodiimidverbindung eine Verbindung der Formel (I) R'-(-N=C=N-R-)ₙ-R" (I) ist,
in der
- R einen aromatischen, aliphatischen, cycloaliphatischen oder araliphatischen Rest bedeutet, der in dem Fall eines aromatischen oder eines araliphatischen Restes in einer ortho-Stellung, bevorzugt in beiden ortho-Stellungen zum aromatischen Kohlenstoffatom, das die Carbodiimidgruppe trägt, aliphatische und/oder cycloaliphatische Substituenten mit mindestens 2 Kohlenstoffatomen, bevorzugt verzweigte oder cyclische aliphatische Reste mit mindestens 3 Kohlenstoffatomen, insbesondere Isopropylgruppen, tragen kann,
- R' gleich Aryl, Aralkyl oder R-NCO, R-NHCONHR¹, R-NHCONR¹R² und R-NHCOOR³ bedeutet,
- R" gleich -N=C=N-Aryl, -N=C=N-Alkyl, -N=C=N-Cycloaliphat, -N=C=N-Aralkyl, -NCO, -NHCONHR¹, -NHCONR¹R² oder NHCOOR³ bedeutet,
- wobei in R' und in R" unabhängig voneinander R¹ und R² gleich oder verschieden sind und einen Alkyl-, Cycloalkyl- oder Aralkylrest darstellen und R³ eine der Bedeutungen von R¹ hat oder einen Polyester- oder einen Polyamidrest bedeutet und
n eine ganze Zahl von 1 bis 5.000 darstellt.

**7.** Verwendung von 2-(1,1-Dimethylethyl)-6-[[3-(1,1-dimethylethyl)-2-hydroxy-5-methylphenyl]methyl-4-methylphenyl]acrylat zur Farbstabilisierung von Schmelzklebstoffen in der Schmelze.

**8.** Verwendung nach Anspruch 7, **dadurch gekennzeichnet, dass** zusätzlich mindestens eine Verbindung der Formel (I)
R'-(-N=C=N-R-)ₙ-R" (I)
eingesetzt wird
in der
- R einen aromatischen, aliphatischen, cycloaliphatischen oder araliphatischen Rest bedeutet, der in dem Fall eines aromatischen oder eines araliphatischen Restes in einer ortho-Stellung, bevorzugt in beiden ortho-Stellungen zum aromatischen Kohlenstoffatom, das die Carbodiimidgruppe trägt, aliphatische und/oder cycloaliphatische Substituenten mit mindestens 2 Kohlenstoffatomen, bevorzugt verzweigte oder cyclische aliphatische Reste mit mindestens 3 Kohlenstoffatomen, insbesondere Isopropylgruppen, tragen kann,
- R' gleich Aryl, Aralkyl oder R-NCO, R-NHCONHR¹, R-NHCONR¹R² und R-NHCOOR³ bedeutet,
- R" gleich -N=C=N-Aryl, -N=C=N-Alkyl, -N=C=N-Cycloaliphat, -N=C=N-Aralkyl, -NCO, -NHCONHR¹, -NHCONR¹R² oder NHCOOR³ bedeutet,
- wobei in R' und in R" unabhängig voneinander R¹ und R² gleich oder verschieden sind und einen Alkyl-, Cycloalkyl- oder Aralkylrest darstellen und R³ eine der Bedeutungen von R¹ hat oder einen Polyester- oder einen Polyamidrest bedeutet und
n eine ganze Zahl von 1 bis 5.000 darstellt.

**9.** Verwendung nach einem der Ansprüche 7 oder 8, **dadurch gekennzeichnet, dass** die mindestens eine Carbodiimidverbindung in Mengen von zwischen 0,001 Gew.-% und 10 Gew.-%, bezogen auf den Schmelzklebstoff, verwendet wird.

**10.** Verwendung nach einem der Ansprüche 7 bis 9 in einem Bereich der Verpackungsindustrie, der Kleidung, der Ölfilter, der Elektrotechnik; der Kabeldurchführungen und Dichtungsmuffen, der Möbel- und Holzindustrie; der Laminiertechnik; der Schuhindustrie; der Windeln, der Teppichindustrie; im Heimwerkerbereich und des Buchbinden verwendet wird.

**11.** Verwendung nach einem der Ansprüche 7 bis 10 zum Verkleben von Kartons, Briefumschlägen und Beuteln; zum Einkleben von Schulterpolstern in Jacketts, in Fahrzeugen zum Einkleben von Papierrollen in das Gehäuse; beim Umspritzen von Bauteilen und Elektroniken als Gehäuseersatz; für Leitungen in Kraftfahrzeugen; zum Verkleben der saugfähigen Vliese in die Hülle, in der Form von Schmelzklebepistolen mit Klebstoffkerzen und zum Anbringen des Umschlags am Buch.

**12.** Verfahren zur Herstellung von einer Schmelzklebstoffzusammensetzung, **dadurch gekennzeichnet, dass** nach Herstellung des Schmelzklebstoffes mindestens ein Carbodiimid zur Farbstabilisierung des Schmelzklebstoffs zusammen mit 2-(1,1-Dimethylethyl)-6-[[3-(1,1-dimethylethyl)-2-hydroxy-5-methylphenyl]methyl-4-methylphenyl]acrylat als Antioxidationsmittel vermischt wird.

**13.** Verfahren nach Anspruch 12 zur Herstellung eines Schmelzklebstoffes gemäß einem der Ansprüche 1 bis 6.

**14.** Schmelzklebstoffzusammensetzung, erhältlich gemäß einem Verfahren nach Anspruch 12 oder 13.
